Europäisches Patentamt

(19) European Patent Office

Office européen des brevets

(11) Publication number: **0 322 949 B1**

# EUROPEAN PATENT SPECIFICATION

(12)

(45) Date of publication of patent specification:
09.10.91 Bulletin 91/41

(51) Int. Cl.⁵: **B60R 13/06, B60R 13/07,**
**B62D 25/07**

(21) Application number: 88202831.9

(22) Date of filing: 09.12.88

(54) Bodywork for automobiles.

(30) Priority: 24.12.87 IT 2322287

(43) Date of publication of application:
05.07.89 Bulletin 89/27

(45) Publication of the grant of the patent:
09.10.91 Bulletin 91/41

(84) Designated Contracting States:
DE ES FR GB SE

(56) References cited:
DE-A- 3 129 067
DE-U- 8 604 027
GB-A- 2 170 848

(73) Proprietor: ALFA LANCIA S.p.A.
Viale Alfa Romeo
I-20020 Arese, Milan (IT)

(72) Inventor: Petrelli, Luigi
Via Spallanzani 23
I-20025 Legnano, Milan (IT)

(74) Representative: De Carli, Erberto et al
ING. BARZANO' & ZANARDO MILANO S.p.A.
Via Borgonuovo, 10
I-20121 Milano (IT)

## Description

The present invention relates to a bodywork for automobiles, wherein the rims of the doors, and the same doors, have such a structure as to make it possible both traditional solutions, with doors enclosed inside their rims, and less usual solutions, with doors of the so-said "enveloping" type, to be accomplished.

A bodywork having these characteristics was already proposed in European patent application EP-A-0193499. In it, for the rims, or rings, of the doors, the adoption of a longitudinal member is proposed, which is adaptable to both door types, i.e., the traditional and the "enveloping" doors. In fact, the longitudinal member is provided with an upper, substantially horizontal, flange, on which an "L"-shaped gasket can be mounted, which performs the function of acting as a water drain channel, and is suitable to engage with a door of traditional type ; or a "V"-shaped gasket can be mounted, which is suitable for engaging with a door of "enveloping" type, and is capable of forming a water drain channel, when the same door is open.

In this case, a specific frame for each type of door is provided for, and the solutions proposed do not show common elements.

Furthermore, with doors of traditional type, in the regions of the side edges of the passenger's compartment, a faired and radiused outline is not provided for, as in case of doors of "enveloping" type ; therefore, a less favourable solution results, as regards the aerodynamic resistance coefficient (Cx) and the noisiness of the car.

Finally, still in case of doors of traditional type, the width of the available room inside the passenger compartment results reduced.

The purpose of the present invention is to provide a bodywork for automobiles which does not suffer from these limitations, and which, on the contrary, results optimized as regards the flexibility of manufacturing, and the performance, of the car.

These results are obtained by means of a bodywork wherein the rims of the doors, and the frames of the same doors show a common basic structure, which can be used both with doors of traditional type, and with doors of "enveloping" type.

According to the present invention a bodywork for automobiles, wherein the rims of the doors are formed at the top by longitudinal members provided with at least a substantially horizontal upper flange and in which said doors, provided at their top with a cross piece structure formed by at least one section bar with a channel of a substantially C-shaped cross-section, have their upper edges extending above or under said flange (see EP-A-0193499) is characterized in that a supplementary section bar is suitable for being fastened to said longitudinal members, said supplementary section bar being formed by at least a wall with an arcuate cross section suitable for radiusing to the outer outlines of said longitudinal members and cross-piece structure.

According to a preferred solution, the frames of the above said doors are equipped at their top with a crosspiece with a structure also comprising a section bar with a substantially "U"-shaped cross section, made integral with the above said section bar having a substantially "C"-shaped cross section.

The proposed solution is endowed with the maximum number of common components, because it supplies a basic solution which can be used independently from the type of the doors, and is therefore adaptable to different models of automobiles.

Furthermore, it makes it possible an outer smooth, so-said "flush", profile to be obtained in the areas of the side edges of the passenger's compartment of the car, not only with doors of "enveloping" type, but also with doors of traditionale type.

Finally, even with traditional doors, it makes it possible a rather wide passenger's compartment, as wide as a bodywork with "enveloping" doors, to be achieved.

Characteristics and advantages of the invention are now illustrated by referring to Figures from 1 to 4, wherein for exemplifying, non-limitative purposes, a preferred form of practical embodiment of the same invention is depicted.

Figure 1 shows a partial side view of a car equipped with a bodywork manufactured according to the present invention ;

Figure 2 shows a partially sectional view according to path II-II of Figure 1.

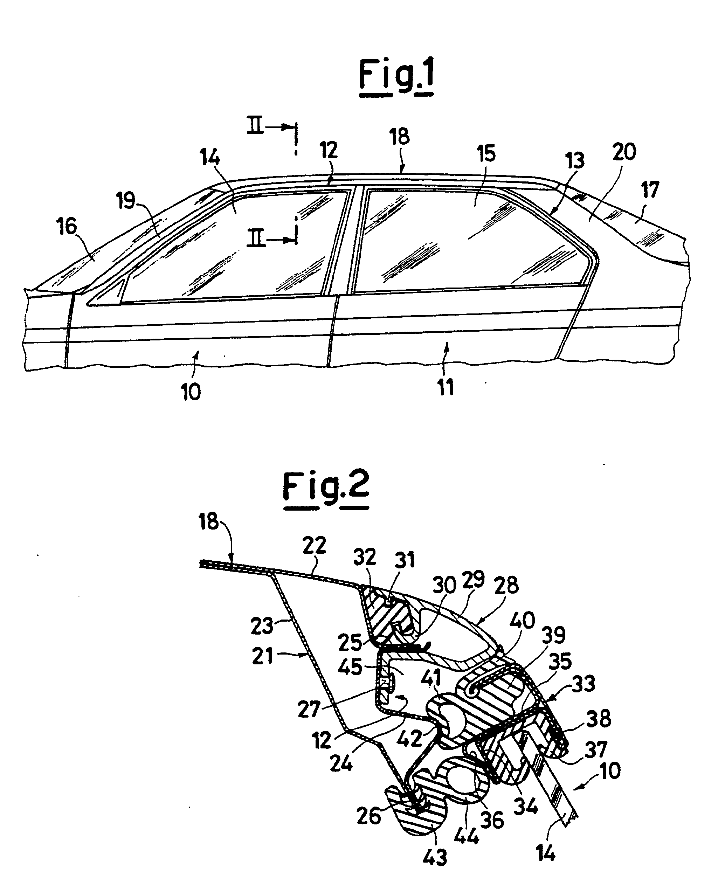

In Figure 1, the doors, generally indicated by the reference numerals 10 and 11, of a car, are partially shown. In the depicted case, the doors are of traditional type, encased inside their respective rims, generally indicated by the reference numerals 12 and 13.

By the reference numerals 14 and 15, also the sliding glasses are indicated, with which the windows of the doors 10 and 11 are provided ; the windscreen and the rear window of the automobile are indicated by the reference numerals 16 and 17, and the passenger's compartment of the car is indicated by the reference numeral 18.

The front upright and the rear upright of the bodywork of Figure 1 are generally indicated by the reference numerals 19 and 20.

By the reference numeral 21, a longitudinal member, visible in Figure 2, is indicated, which connects the uprights 19 and 20, and bounds at the top the rims 12 and 13.

The longitudinal member 21 is a closed cross-section box-type beam, composed of three walls of pressed steel plate, respectively indicated by the reference numerals 22, 23 and 24, welded to each other along their edges, in order to form a substantially horizontal flange 25, and a substantially vertical flange 26.

To the wall of steel plate 24, a supplementary section bar is fastened by means of rivets, like the one indicated by the reference numeral 27. Said section bar is generally indicated by the reference numeral 28, and is formed by two walls, i.e., an outer wall and an inner wall, with an arcuate cross section.

The outer wall 29 of the section bar 28 is provided with a hook 30 and with a detent 31, which retain a gasket 32 located between said section bar 28 and the car passenger's compartment 18.

In Figure 2, the upper crosspiece of the door frame 10 is visible. Said upper crosspiece is provided with a structure generally indicated by the reference numeral 33. The structure 33 is composed by the steel plate section bars 34, 35, 36.

The section bar 34 has a substantially "C"-shaped cross-section, with the channel being directed downwards, and houses the glass 14 (15), with a gasket 37 being interposed.

The section bar 35 has a substantially "U"-shaped cross section, with the channel being directed towards the interior of the automobile, and is provided with a small radiusing flange 36 constituting one single piece with the section bar 34.

The section bar 38, having a cross section of a substantially reverse-"L"-shape, is welded to the section bars 34 and 35, and acts as a strengthening, external-finishing panel.

The section bar 38 retains the gasket, generally indicated by the reference numeral 39, which is provided with a tongue 40, interposed between the crosspiece 33 and the supplementary section bar 28, and with a tubular portion 41, which comes into contact with a longitudinal bulge 42 of the wall 24 of the longitudinal member 21.

On the flange 26 a gasket is mounted, generally indicated by the reference numeral 43, which is provided with a tubular element 44, suitable for coming into contact with the crosspiece 33 of the door 10.

The supplementary section bar 28 and the gasket 32 seal the longitudinal chamber 45 comprised between the longitudinal member 21 of the passenger's compartment and the upper crosspiece 33 of the door, masking the flange 25 and forming a wall (29) fitting in with the outer outline of the longitudinal member 21, and the outer outline of the crosspiece 33.

Thus, in the region of the side edge of the passenger's compartment 18, a flush outer profile is accomplished, which prevents air vortices from forming, and hence improves the aerodynamic characteristics and the silentness of the car.

From the above structure, also a positioning of doors 10 and 11 inside their rims 12 and 13 results, which is particularly favourable for the comfort of the car, because the width of the passenger's compartment can be as large as obtainable with the doors of the so-said "enveloping" type.

From the disclosed examples, it results that the bodywork of Figure 1, with doors of traditional type, is accomplished by starting from a common basic structure formed by the longitudinal member (21) of the passenger compartment, and by the structure (34, 35, 36) of the upper crosspiece of the doors (10 and 11).

From that, considerable advantages result, owing to the simplification and the reduction in design and manufacturing costs, which can be achieved when different models of cars are accomplished.

## Claims

1. Bodywork for automobiles, wherein the rims (12, 13) of the dors (10, 11) are formed at the top by longitudinal members (21) provided with at least a substantially horizontal upper flange (25) and in which said doors (10, 11), provided at their top with a cross piece structure (33) formed by at least one section bar (34) with a channel of a substantially C-shaped cross-section facing downwardly, have their upper edges extending above or under said flange (25), characterized in that a supplementary section bar (28) is suitable for being fastened to said longitudinal members (21), said supplementary section bar (28) being formed by at least a wall (29) with an arcuate cross-section suitable for fitting in with the outer outlines of said longitudinal members (21) and crosspiece structure (33).

2. Bodywork according to claim 1, characterized in that the frames of the above said doors (10, 11) are provided, at their top, with a crosspiece with a structure (33) also comprising a section bar having a substantially "U"-shaped cross section 35, made integral with the above said section bar with a substantially "U"-shaped cross section (34).

3. Bodywork according to claim 1, characterized in that the above said longitudinal members (21) are composed by three walls (22, 23, 24) of pressed steel plate, welded to each other along their edges, in order to form the above said substantially horizontal flange (25), and a substantially vertical flange (26).

4. Bodywork according to claim 3, characterized in that the outer wall (24) of said longitudinal member (21), joined to the other two walls (22, 23) by means of the above said flanges (25 and 26), has a longitudinal bulge (42).

## Patentansprüche

1. Fahrzeugkarosserie, bei welcher die Kanten (12, 13) der Türen (10, 11) an dir Oberseite mit Längselementen (21) mit wenigstens einem in wesentlichen horizontalen oberen Flansch (25) ausgebildet sind und die Türen (10, 11) an der Oberseite mit einer Querträgerstruktur (33) ausgebildet sind, welche von wenigstens einem Profilstab (34) mit einem Kanal mit im wesentlichen C-förmigem, nach unten gerichteten Querschnitt gebildet ist, dessen obere Kanten sich über oder unter den Flansch (25) erstrecken, dadurch gekennzeichnet, daß ein zusätzlicher Profilstab (28) für eine Befestigung an den Längselementen (21) geeignet ist, wobei der zusätzliche Profilstab (28) von wenigstens einer Wand (29) mit gekrümmtem Querschnitt gebildet ist, welcher für eine Anpassung an die Außenlinien der Längselemente (21) und der Querträgerstruktur (33) geeignet ist.

2. Karosserie nach Anspruch 1, dadurch gekennzeichnet, daß die Rahmen der Türen (10, 11) an ihrer Oberseite mit einem Querträger mit einer Struktur (33) ausgebildet sind, welche ebenfalls einen Profilstab mit im wesentlichen U-förmigem Querschnitt (35) umfaßt, welcher mit dem oben genannten Profilstab mit im wesentlichen U-förmigem Querschnitt (34) verbunden ist.

3. Karosserie nach Anspruch 1, dadurch gekennzeichnet, daß die Längselemente (21) aus drei Wänden (22, 23, 24) aus gepreßten Stahlplatten gebildet sind, welche Laenge ihrer Kanten miteinander verschweisst sind, um dem im wesentlichen horizontalen Flansch (25) und einen im wesentlichen vertikalen Flansch (26) auszubilden.

4. Karosserie nach Anspruch 3, dadurch gekennzeichnet, daß die Außenwand (24) des Längselementes (21), welche mit den anderen zwei Wänden (22, 23) über die Flansche (25, 26) verbunden ist, einen Längswulst (42) aufweist.

## Revendications

1. Carrosserie pour automobiles, dans laquelle les bords (12, 13) des baies des portes (10, 11) sont constitués, dans la partie haute, par des éléments longitudinaux (21) munis d'au moins une aile supérieure (25) au moins sensiblement horizontal, et dans laquelle lesdites portes (10, 11) qui sont munies dans leur partie haute, d'une structure de pièce transversale (33), formée d'au moins une barre profilée (34) possédant une rainure à section transversale sensiblement en forme de C qui regarde vers le bas, présentent leurs bords inférieurs au-dessus et au-dessous de ladite aile (25), caractérisée en ce qu'une barre profilée supplémentaire (28) est appropriée pour être fixée auxdits éléments longitudinaux (21), ladite barre profilée supplémentaire (28) étant formée d'au moins une paroi (29) possédant une section incurvée appropriée pour s'ajuster sur les contours extérieurs desdits éléments longitudinaux (21) et de la structure de pièce transversale (33).

2. Carrosserie selon la revendication 1, caractérisée en ce que les cadres desdites portes (10, 11) sont munis, dans leur partie supérieure, d'une pièce transversale possédant une structure (33) qui comprend aussi une barre profilée ayant une section transversale (35) sensiblement en forme de U qui est venue d'une seule pièce avec ladite barre profilée à section transversale (34) sensiblement en forme de U.

3. Carrosserie selon la revendication 1, caractérisée en ce que lesdits éléments longitudinaux (21) sont composés de trois parois (22, 23, 24) en tôle emboutie, qui sont soudées les unes aux autres le long de leurs bords pour former ladite aile (25) sensiblement horizontale et une aile (26) sensiblement verticale.

4. Carrosserie selon la revendication 3, caractérisée en ce que la paroi extérieure (24) dudit élément longitudinal (21), qui est réunie aux deux autres parois (22, 23) à l'aide desdites ailes (25 et 26), possède un bombement longitudinal (42).

EP 0 322 949 B1

# Fig.1

# Fig.2

5